# EUROPEAN PATENT SPECIFICATION

(11) **EP 2 057 211 B1**
(45) Date of publication and mention of the grant of the patent: **02.01.2013**
(21) Application number: 07804056.5
(22) Date of filing: 24.08.2007
(51) Int. Cl.: C09J 11/04, B82Y 30/00, B82Y 20/00, C08J 5/00, C08K 3/00, C09J 9/00, G02B 1/00, G02B 1/04

(54) **OPTICAL NANOMATERIAL COMPOSITIONS**
OPTISCHE NANOMATERIALZSUAMMENSETZUNGEN
COMPOSITIONS DE NANOMATÉRIAUX OPTIQUES

(30) Priority: 31.08.2006 US 513484
(43) Date of publication of application: 13.05.2009
(73) Proprietor: Cambridge Enterprise Limited, Trinity Lane Cambridge Cambridgeshire CB2 1TN (GB)
(72) Inventor: ROZHIN, Oleksiy, Cambridge Cambridgeshire CB4 1YE (GB); FERRARI, Andrea, Cambridge Cambridgeshire CB2 3QY (GB); MILNE, William Ireland, Newmarket Suffolk CB8 8GA (GB)
(74) Representative: Naylor, Matthew John
(86) International application number: PCT/GB2007/003239
(87) International publication number: WO 2008/025966

(56) References cited:
- WO-A-03/040026
- US-A- 5 910 522
- US-A1- 2002 176 650

## Description

### 1. FIELD OF THE INVENTION

The present invention relates to Optical Nanomaterial Compositions comprising one or more nanomaterials and an optical coupling gel or an optical adhesive. The compositions are useful in optoelectronic, photonic and sensing applications.

### 2. BACKGROUND OF THE INVENTION

Optical coupling gels and optical adhesives are key components in modern light-wave systems. Optical coupling gels act as light junctions between optical fiber ends or surfaces of optical devices. They fill the gap between two mating parts and minimize reflections by matching the refractive indexes. Optical coupling gels are typically epoxy or silcone-based polymers, having excellent elastic and thermal properties as well as good chemical stability. Optical adhesives are polymers which are used for the assembly of optical parts and optical elements used in optical fiber communication and other photonic systems. Optical adhesives can comprise organic or synthetic compounds, as well as acrylic, epoxy and silicone resins and can act as index-matching agents. The optical adhesives utilized can be cured either optically (e.g., UV) or thermally.

Organic and inorganic nanomaterials, such as single or multi-walled nanotubes, nanowires, nanodots, quantum dots, nanorods, nanocrystals, nanotetrapods, nanotripods, nanobipods, nanoparticles, nanosaws, nanosprings, nanoribbons, or branched nanomaterials, are of great interest to researchers in various fields such as chemistry, physics, materials science, and electrical engineering, due to their unique structures and unique electrical, mechanical, electro-optical and electromechanical properties. Accordingly, these nanomaterials show promise as components for electronic and optical and sensor devices.

Recently, the nonlinear optical properties of materials such as carbon nanotubes and PbSe and PbS quantum dots have attracted a great deal of interest. By "nonlinear optical properties" we refer to the nonlinear variations of the optical characteristics of a given material with changes in the intensity and power of incident and/or transmitted light. A typical example of nonlinear optical property is the saturable absorption of a material. In this case the material's optical absporption decreases nonlinearly with increased intensity and/or power of the incident light, up to a point where the material gets "bleached", i.e. it becomes transparent to the incident light and allows almost unperturbed light transmission.

Some experimental studies have concentrated on the saturable absorption properties of carbon nanotube suspensions, nanotube-polymer compositions and PbSe nanoparticle solutions. These studies demonstrate that nanotubes, and nanomaterials in general, can exhibit very strong third-order optical nonlinearity. In addition, nanotubes and nanomaterials show ultrafast dynamics. These properties make nanotubes and nanomaterials attractive materials for use in numerous applications in the fields of optics, electronics and photonics.

Accordingly, nanomaterials show promise as a filler in optical coupling gels and optical adhesives, where the gel or adhesive incorporating nanotube and nanomaterial would have enhanced and versatile optical properties. This invention is directed to such optically useful compositions.

US-A-5,1910, 552 discloses an optical adhesive composition which includes nanoscale SiO₂ particles in a matrix of epoxide resin.

WO 2004/059806 discloses pulsed lasers which employ layers of carbon nanotubes as saturable absorbers, mode lockers or for Q-switching elements.

### 3. SUMMARY OF THE INVENTION

In one aspect, the invention provides a use of a composition as set out in claim 1.

The compositions whose use in claimed are collectively referred to herein as the "Optical Nanomaterial Compositions."

### 4. BRIEF DESCRIPTION OF THE DRAWINGS

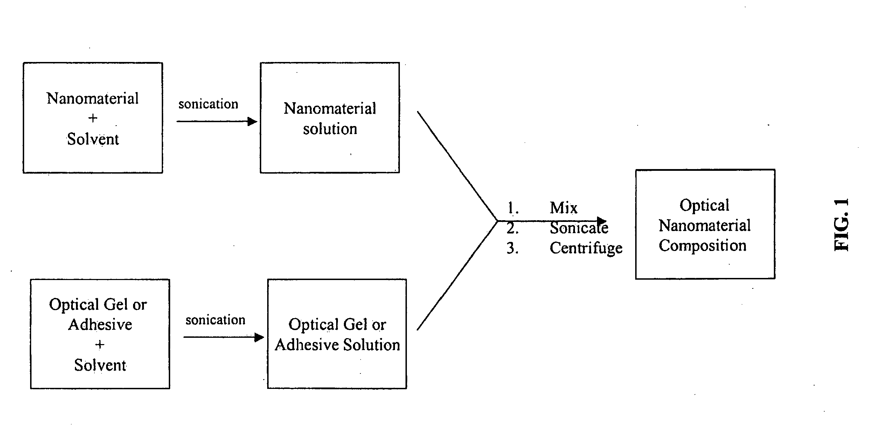

**FIG. 1** is a schematic diagram of a general procedure (denoted "General Procedure I" below herein) useful for making the Optical Nanomaterial Compositions for use with the present invention. One or more nanomaterials is taken up in an appropriate solvent and the mixture is sonicated to provide a dispersed nanomaterial solution. In a separate vessel, an optical coupling gel is taken up in an appropriate solvent and sonicated to provide an optical coupling gel solution. The optical coupling gel solution and the dispersed nanomaterial solution are then mixed and sonicated to provide a nanomaterial suspension solution which is subjected to fast mixing followed by centrifugation to provide an Optical Nanomaterial Composition for use with the present invention.

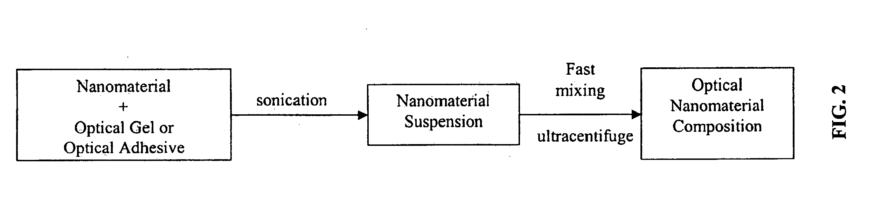

**FIG. 2** is a schematic diagram of a general procedure (denoted "General Procedure II" below herein) useful for making the Optical Nanomaterial Compositions for use with the present invention. One or more nanomaterials is taken up in a liquid optical coupling gel and the solution is sonicated to provide a nanomaterial suspension in the optical coupling gel. The suspension is then subjected to fast mixing followed by ultracentrifugation to provide an Optical Nanomaterial Composition for use with the present invention.

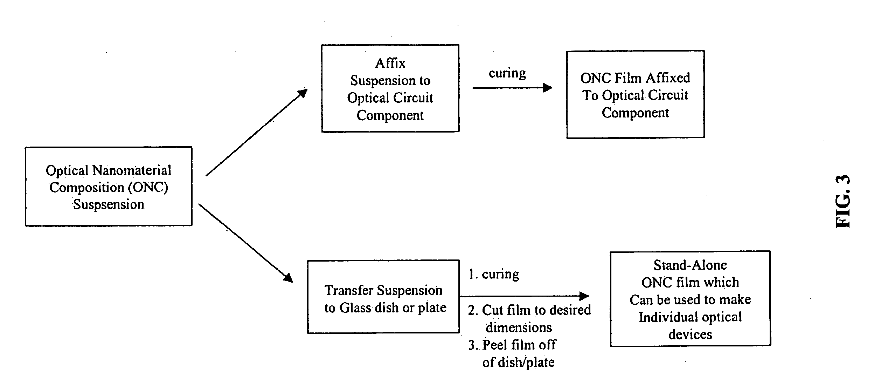

**FIG. 3** is a schematic diagram illustrating how an Optical Nanomaterial Composition for use with the invention can be cured to provide a film, wherein said film can be formed directly on an optical circuit and used as an optical circuit component, or alternatively, the composite can be cured using UV light, heat or chemical-induced cross-linking to provide an Optical Nanomaterial Composition film.

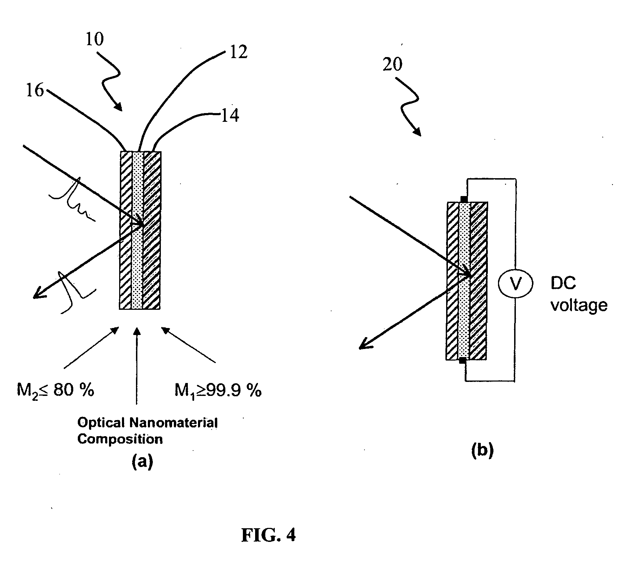

**FIG. 4** illustrates a Gires -Tournois interferometer, which is a transparent plate with two reflecting surfaces, one of which has very high reflectivity. Due to multiple-beam interference, light incident on the lower-reflectivity surface of a Gires-Tournois interferometer is almost completely reflected, but has a phase shift that depends strongly on the wavelength of the light. FIG. 4(a) shows a Gires -Tournois interferometer 10 having an Optical Nanomaterial Composition (dotted bar) sandwiched between two mirrors 14, 16, the first 14 of which is fully reflective (M1 ≥ 99.9 %) and the second 16 of which is semi-transparent (M2 ≤ 80 %). The interferometric structure is allowed to enhance the nonlinearity of the Optical Nanomaterial Composition. FIG. 4(b) shows a Gires -Tournois interferometer 20 wherein DC voltage has been applied to the Optical Nanomaterial Composition, resulting in electro-optical modulation of the light by the composition.

The present invention may be understood more fully by reference to the following detailed description, which is intended to exemplify non-limiting embodiments of the invention.

### 5. DETAILED DESCRIPTION OF THE INVENTION

In one aspect, the present invention provides a use of optical Nanomaterial Compositions comprising one or more nanomaterials and an optical coupling gel.

### 5.1 The Optical Nanomaterial Compositions

The Optical Nanomaterial Compositions of the invention comprise: (1) one or more nanomaterials; and (2) an optical coupling gel.

The Optical Nanomaterial Composition is in the form of a gel. In one embodiment, an Optical Nanomaterial Composition that is in the form of a gel is cured to provide a film. Such a film may be used as a free-standing film, or alternatively, the film may be affixed to a substrate, such as quartz, glass, or a dielectric mirror to construct an optical device, such as a lens, a prism, a polarization plate, a fiber end, a fiber surface, a waveguide facet, a waveguide surface, or a laser material surface. An Optical Nanomaterial Composition may also be used in gel form and cured after the gel is placed at the interface of two optical components. For example, an Optical Nanomaterial Composition that is in the form of a gel may be placed in a suitable optical or sensing cell for similar applications.

The Optical Nanomaterial Composition may further comprise a solvent, such as water, organic solvents, inorganic solvents, or mixtures thereof. Illustrative solvents includ, but are not limited to, water, D₂O, acetone, ethanol, dioxane, ethyl acetate, methyl ethyl ketone, isopropanol, anisole, γ-butyrolactone, dimethylformamide, N-methylpyrroldinone, dimethylacetamide, hexamethylphosphoramide, toluene, dimethylsulfoxide, cyclopentanone, tetramethylene sulfoxide, xylene, ε-caprolactone, tetrahydrofuran, tetrachloroethylene, chloroform, chlorobenzene, dichloromethane, 1,2-dichloroethane, 1,1,2,2-tetrachloroethane, and mixtures thereof. In certain embodiments, the Optical Nanomaterial Composition can be contained in a suitable optical or sensing cell.

In one embodiment, an Optical Nanomaterial Composition is in the form of a film.

In another embodiment, an Optical Nanomaterial Composition is affixed to a quartz substrate.

In still another embodiment, an Optical Nanomaterial Composition is affixed to a glass substrate.

In another embodiment, an Optical Nanomaterial Composition is affixed to a dielectric mirror.

In another embodiment, an Optical Nanomaterial Composition is affixed applied to a quartz, glass, or a mirror to construct an optical device, such as a lens, a prism, a polarization plate, a fiber end, a fiber surface, a waveguide facet, a waveguide surface, or a laser material surface.

In another embodiment, an Optical Nanomaterial Composition is used as an index-matching gel.

In a further embodiment, an Optical Nanomaterial Composition is used as a light junction or optical interconnect.

In one embodiment, an Optical Nanomaterial Composition comprises a plurality of single-walled carbon nanotubes in an optical coupling gel.

In one embodiment, a plurality of nanomaterials is randomly oriented in the optical coupling gel of the Optical Nanomaterial Composition. In another embodiment, a plurality of nanomaterials is arranged in a regularly oriented array within the optical coupling gel of the Optical Nanomaterial Composition.

The refractive index of the Optical Nanomaterial Composition can be fine-tuned by controlling the concentration of nanomaterial in the Optical Nanomaterial Composition.

### 5.2 The Nanomaterials

The term "nanomaterial" as used herein, refers to a structure having at least one dimension of less than about 500 nm. In various embodiments, a nanomaterial has at least one dimension of less than about 200 nm, less than about 100 nm, less than about 50 nm, less than about 20 nm or less than about 10 nm. In certain embodiments, each of the three dimensions of the nanomaterial has a dimension of less than about 500 nm, less than about 200 nm, less than about 100 nm, less than about 50 nm, less than about 20 nm or less than about 10 nm. In other embodiments, nanomaterials can have at least one dimension in the size ranging from about 0.5 nm to about 10 nm.

Illustrative nanomaterials useful in compositions of the invention include, but are not limited to, a single or multi-walled nanotube, a nanowire, a nanodot, a quantum dot, a nanorod, a nanocrystal, a nanotetrapod, a nanotripod, a nanobipod, a nanoparticle, a nanosaw, a nanospring, a nanoribbon, a branched tetrapod or any other branched nanomaterial, or any combination thereof. The nanomaterial can comprise organic materials, inorganic materials or a combination thereof.

In one embodiment, the nanomaterial is a single-walled carbon nanotube.

The nanomaterials may have a monocrystalline structure, a double-crystal structure, a polycrystalline structure, an amorphous structure, or a combination thereof.

The nanomaterials can comprise following elements or compounds: Au, Ag, Pt, Pd, Ni, Co, Ti, Mo, W, Mn, Ir, Cr, Fe, C, Si, Ge, B, Sn, SiGe, SiC, SiSn, GeC, BN, InP, InN, InAs, InSb, GaN, GaP, GaAs, GaSb, AlN, AlP, AlAs, AlSb, CdO, CdS, CdSe, CdTe, ZnO, ZnS, ZnSe, ZnTe, MgO, MgS, MgSe, MgTe, HgO, HgS, HgSe, HgTe, PbO, PbS, PbSe, PbTe, GeS, GeSe, GeTe, SnS, SnSe, SnTe, InO, SnO, GeO, WO, TiO, FeO, MnO, CoO, NiO, CrO, VO, CuSn, CuF, CuCl, CuBr, CuI, AgF, AgCl, AgBr, AgI, CaCN₂, BeSiN₂, ZnGeP₂, CdSnAs₂, ZnSnSb₂, CuGeP₃, CuSi₂P₃, Si₃N₄, Ge₃N₄, Al₂O₃, Al₂CO, InₓO_{y}, SnₓO_{y}, SiOₓ, GeOₓ, WₓO_{y}, TiₓO_{y}, FeₓO_{y}, MnₓO_{y}, CoₓO_{y}, NiₓO_{y}, CrₓO_{y}, VₓO_{y}, or MSiO₄, any alloys thereof, or any combination thereof, wherein x is an integer ranging from 1 to 5, y is an integer ranging from 1 to 5, and M is selected from Zn, Cr, Fe, Mn, Co, Ni, V, and Ti.

In one embodiment, the nanomaterial comprises Si.

The nanomaterials can also comprise metallic or non-metallic alloys other than those listed above, a polymer, a conductive polymer, a ceramic material, or any combination thereof.

In one embodiment, the nanomaterial comprises a semiconductive material.

When a nanomaterial comprises a semiconductive material, the semiconductive material may futher comprise a dopant. Dopants useful in the present invention include, but are not limited to: a p-type dopant, such as Li, B, Al, In, Mg, Zn, Cd, Hg, C, Si, an element from Group I of the periodic table, an element from Group II of the periodic table, an element from Group III of the periodic table, or an element from Group IV of the periodic table; or an n-type dopant, such as, Si, Ge, Sn, S, Se, Te, P, As, Sb, Cl, an element from group IV of the periodic table, an element from group V of the periodic table, an element from group VI of the periodic table, or an element from group VII of the periodic table.

In one embodiment, the dopant is a p-type dopant.

In another embodiment, the dopant is an n-type dopant.

When the nanomaterial is a nanotube, nanowire or nanoribbon, the nanotube, nanowire or nanoribbon can comprise a conductive or semiconductive material, such as an organic polymer, pentacene or a transition metal oxide.

The term "nanowire" is defined as any elongated material as described herein that includes at least one cross-sectional dimension less than 500 nm and has an aspect ratio of greater than 10 and is understood to include "whiskers" or "nanowhiskers." The term "nanorod" refers to an elongated material as described herein which has an aspect ratio less than that of a nanowire.

In one embodiment, the nanomaterial is a nanotube.

In another embodiment, the nanomaterial is an inorganic single or multi-walled nanotube.

In a specific embodiment, the nanomaterial is single-walled carbon nanotube.

In another embodiment, the nanomaterial is a nanowire.

In another embodiment, the nanomaterial is a nanodot.

In still another embodiment, the nanomaterial is a quantum dot.

In yet another embodiment, the nanomaterial is a nanorod.

In a further embodiment, the nanomaterial is a nanocrystal.

In still another embodiment, the nanomaterial is a nanotetrapod.

In another embodiment, the nanomaterial is a nanotripod.

In another embodiment, the nanomaterial is a nanobipod.

In yet another embodiment, the nanomaterial is a nanoparticle.

In yet another embodiment, the nanomaterial is a nanosaw.

In yet another embodiment, the nanomaterial is a nanospring.

In yet another embodiment, the nanomaterial is a nanoribbon.

In yet another embodiment, the nanomaterial is a branched nanomaterial.

In yet another embodiment, the Optical Nanomaterial Composition comprises more than one type of nanomaterial.

When the nanomaterial is a nanotube, nanowire or nanoribbon, the nanotube, nanowire or nanoribbon can comprise a conductive or semiconductive material, such as an organic polymer, pentacene or a transition metal oxide.

The nanomaterials may be obtained using any known methods, including, but not limited to, solution-based methods, vapor-phase methods or high-temperature substrate-based methods, such as those described in Greene et al., Angew. Chem. Int. Ed. 42:3031-3034 (2003) and International Publication No. WO 02/017362.

Methods for making nanocrystals are described, for example, in Puntes et al., Science 291:2115-2117 (2001), U.S. Patent No. 6,306,736 to Alivastos et al., U.S. Patent No. 6,225,198 to Alivastos et al.*,* U.S. Patent No. 5,505,928 to Alivastos et al.*,* U.S. Patent No. 6,048,616 to Gallagher et al., and U.S. Patent No. 5,990,479 to Weiss et al.

Methods for making nanowires are described, for example, in Gudiksen et al., J. Am. Chem. Soc. 122:8801-8802 (2000), Gudkisen et al., Appl. Phys. Lett. 78:2214-2216 (2001), Gudiksen et al., J. Phys. Chem. B 105:4062-4064, Morales et al., Science 291:208-211 (1998), Duan et al., Adv. Mater. 12:298-302 (2000), Cui et al., J. Phys. Chem. B 105:5213-5216 (2000), Puentes et al., Science 291:2115-2117 (2001), Peng et al., Nature. 404:59-61 (2000), U.S. Patent No. 6,306,736 to Alivastos et al.*,* U.S. Patent No. 6,225,198 to Alivastos et al.*,* U.S. Patent No. 6,036,774 to Lieber et al.*,* U.S. Patent No. 5,897,945 to Lieber et al. and U.S. Patent No. 5,997,832 to Lieber et al.

Methods for making nanoparticles are described, for example, in Liu et al., J. Am. Chem. Soc. 123:4344 (2001), U.S. Patent No. 6,413,489 to Ying et al.*,* U.S. Patent No. 6,136,156 to El-Shall et al.*,* U.S. Patent No. 5,690,807 to Clark et al.

In one embodiment, an Optical Nanomaterial Composition can comprise two or more distinct nanomaterials. For example, an Optical Nanomaterial Composition can comprise two different types of nanocrystal populations or a nanotube popluation and a nanoparticle population.

The total amount of nanomaterial present in an Optical Nanomaterial Composition is from about 0.0001% to about 99% by total weight of the Optical Nanomaterial Composition. In one embodiment, the nanomaterial is present in an amount of from about 0.01% to about 20% by total weight of the Optical Nanomaterial Composition. In various embodiments, the nanomaterial is present an amount of less than about 20%, less than about 15%, less than about 10%, less than about 5%, less than about 1%, less than about 0.5%, less than about 0.1%, and and less than 0.01% by total weight of the Optical Nanomaterial Composition.

In one embodiment, the nanomaterial is randomly oriented in the optical coupling gel of the Optical Nanomaterial Composition. In another embodiment, the nanomaterial is arranged in a regularly oriented array within the optical coupling gel of the Optical Nanomaterial Composition.

To enhance or optimize the performance of the device or component in which the Optical Nanomaterial Compositions are deployed, the nanomaterial can be functionalized. Functionalization refers to the chemical or physical treatment of the nanomaterial surface aimed at modifying and optimizing charcateristics such as nanomaterial dispersion and solubility in a host polymer matrix, as well as sensitivity in sensing and detection applications

### 5.2.1 Single-Walled Carbon Nanotubes

In one aspect, the invention provides Optical Nanomaterial Compositions comprising one or more single-walled carbon nanotubes and a synthetic silicone polymer. Single-walled carbon nanotubes are rolled up graphene sheets. Their twist or chirality defines their optical and electrical properties. In one embodiment, single-walled carbon nanotubes useful in the present invention have a diameter of from about 0.1 nm to about 10 nm. In another embodiment, the single-walled carbon nanotubes have a diameter of from about 0.5 nm to about 3 nm. In yet another embodiment, the single-walled carbon nanotubes have a diameter of from about 1.0 nm to about 1.5 nm.

In one embodiment, single-walled carbon nanotubes useful in the present invention have lengths of from about 0.01 µm to about 100µm.

The diameter distribution and concentration of nanotubes in in an Optical Nanomaterial Composition can be manipulated to optimize the optical properties of such compositions.

The single-walled carbon nanotubes may be commercially available or, alternatively, can be made by any known means including, but not limited to, a chemical vapor deposition process, a laser ablation process, an arc process, a fluid bed process or a gas-phase process using carbon monoxide. Processes for making single-walled carbon nanotubes, include those disclosed, for example, in Liu et al., Science 280:1253-1256 (1998); M. Bronikowski et al., J. Vacuum Sci. Tech. A 19:1800-1805 (2001); U.S. Patent No. 6,183,714; International Publication No. WO 00/26138; S. Dresselhaus et al., Carbon nanotubes, Topics of applied Physics 80, Springer (2001); S.Lebedkin et al., Carbon 40: 417-423 (2000); and International Publication No. WO 00/17102.

Single-walled carbon nanotubes, whether purchased or synthesized, can further purified prior to incorporation into an Optical Nanomaterial Composition of the present invention using, for example, the methods set forth in International Publication No. WO 02/064,868, which discloses a halogenated gas-phase purification process; or International Publication No. WO 02/064,869, which discloses a process comprising first oxiding the nanotubes, then reacting the oxidized nanotubes with a halogenated acid, each of which is incorporated herein by reference in its entirety. The optoelectronic properties of carbon nanotube compositions can improve dramatically with increasing nanotube purity. It has been reported that high-purity carbon nanotube-containing polymer films can achieve up to 90% visible-light transmittance.

To enhance or optimize the performance of the device or component in which the Optical Nanomaterial Compositions are deployed, the carbon nanotube can be functionalized. Functionalization refers to the chemical or physical treatment of the naotube surface to modify and optimize charcateristics such as nanotube dispersion and solubility in a host polymer matrix, as well as sensitivity in sensing and detection applications.

The single-walled carbon nanotubes are present in an Optical Nanomaterial Composition in an amount of from about 0.0001% to about 99% by total weight of the Optical Nanomaterial Composition. In one embodiment, the single-walled carbon nanotubes are present in an amount of from about 0.01% to about 20% by total weight of the Optical Nanomaterial Composition. In various embodiments, the single-walled carbon nanotubes are in an amount of less than about 20%, less than about 15%, less than about 10%, less than about 5%, less than about 1%, less than about 0.5%, less than about 0.1%, and and less than 0.01% by total weight of the Optical Nanomaterial Composition.

### 5.3 Optical Coupling Gels

In one embodiment, an Optical Nanomaterial Composition comprises one or more nanotube and nanomaterials and an optical coupling gel. Optical coupling gels are used as an optical coupling medium to facilitate light transmission through various optical components in an optical device or optical communication system. Such coupling gels are typically used at the interface of two optical components. Accordingly, in one embodiment, the Optical Nanomaterial Compositions of the present invention can be used as an index-matching material.

When used as an index-matching material, an Optical Nanomaterial Composition preferably has an index of refraction that is compatible with the indexes of refraction of the optical components the Optical Nanomaterial Composition and Nanostructure interacts with.

Optical coupling gels useful as dispersion media in the present invention include any optical coupling gel. In one embodiment, the optical coupling gel is commercially available. Illustrative examples of commercially available optical coupling gels include, but are not limted to, index matching liquid 150 (Norland Products, Cranbury, NJ); Q2-3067, OE-4000, OE-4100 and OE-4200 (Dow Corning Corp., Midland, MI); and OG-1001 (Luxlink™, Hicksville, NY); 0607 and 0608 (Cargille Laboratories, 55 Commerce Rd. Cedar Grove, NJ 07009 USA

In one embodiment, when used as an index-matching material, an Optical Nanomaterial Composition has an index of refraction that is between the indexes of refraction of the optical components that the Optical Nanomaterial Composition interacts with.

The Optical Nanomaterial Compositions, when comprising an optical coupling gel, can be used as index-matching gels in fiber optics and telecommunications, and may be used in conjunction with pairs of mated connectors, with mechanical splices, or at the ends of fibers. In ene embodiment, the Optical Nanomaterial Compositions, when comprising an optical coupling gel, can also be used to reduce Fresnel reflection at the surface of an optical component and Fabry Perot filtering effects. In other embodiments, the Optical Nanomaterial Compositions, when comprising an optical coupling gel, can also be used for waveguide protection and cladding, splicing, connecting, gap filling, and component assembly.

### 5.5 Making the Optical Nanomaterial Compositions

The Optical Nanomaterial Compositions of the invention can be made using the methods disclosed, for example, in International Publication No. WO 04/097853 to Grunlan et al.*,* U.S. Patent No. 6,782,154 to Zhao et al., International Publication No. WO 03/040026 to Connell et al.*,* and Breuer et al., Polymer Composites, 25:630-645 (2004).

An Optical Nanomaterial Composition can be prepared in the form of a film using any known methodology for making nanotube/polymer composites such as that disclosed, for example, in U.S. Patent No. 6,782,154 to Zhao et al. and International Publication No. WO 03/040026 to Connell et al.*,* Some general methods useful for making the Optical Nanomaterial Compositions of the present invention and films thereof are set forth below.

### General Method I for Making an Optical Nanomaterial Composition

One or more of the nanomaterials is suspended in a solvent and the mixture is ultra-sonicated for a period of from about 30 seconds to about 48 hours. The sonication serves to evenly disperse the nanotubes and/or nanostrauctures within the solvent and to break up any nanotube and/or nanostrauctures aggregates, including long chains of nanomaterials. In a separate vessel, a dispersion media is dissolved in a solvent using sonication. The nanomaterialss solution and the dispersion media solution are then mixed together and sonicated to provide a uniform suspension of the nanomaterials in the dispersion media solution. The suspension is then subjected to ultracentrifugation using centifugal force of up to 1,000,000 g to provide an Optical Nanotube and Nanostructures Composition which may be used as is in solution or gel form or can be further concentrated *in vacuo* or by baking. This method is illustrated in FIG. 1.

Solvents useful in the methods for making the Optical Nanomaterial Compositions of the present invention include water, organic solvents, inorganic solvents, or mixtures thereof. Illustrative solvents include, but are not limited to, water, D₂O, acetone, ethanol, dioxane, ethyl acetate, methyl ethyl ketone, isopropanol, anisole, γ-butyrolactone, dimethylformamide, *N*-methylpyrroldinone, dimethylacetamide, hexamethylphosphoramide, toluene, dimethylsulfoxide, cyclopentanone, tetramethylene sulfoxide, xylene, ε-caprolactone, tetrahydrofuran, tetrachloroethylene, chloroform, chlorobenzene, dichloromethane, 1,2-dichloroethane, 1,1,2,2-tetrachloroethane, and mixtures thereof.

When the solvent comprises water or organic solvents, the Optical Nanomaterial Composition can further comprise a surfactant to assist in stabilizing the nanotube suspension. Surfactants useful in the present methods include cationic, anionic, nonionic or amphoteric surfactants, water-soluble polymers,DNA, RNA and other bio-compounds. Illustrative examples of surfactants include those disclosed in International Publication No. WO 04/097853 to Grunlan et al.

### General Method II for Making an Optical Nanomaterial Composition

One or more of the nanomaterials is suspended in a optical adhesive or index matching gel, and the mixture is ultra-sonicated for a period of from about 30 seconds to about 48 hours. The sonication serves to initially disperse the nanotubes and/or nanostrauctures within the dispersing media and to break up any nanotube and/or nanostrauctures aggregates, including long chains of nanomaterials. The nanomaterialss and the dispersion media are then mixed together by ultrafast homoginizer to provide a uniform suspension of the nanomaterials in the dispersion media solution. The suspension is then subjected to ultracentrifugation using centifugal force of up to 1,000,000 g to provide an Optical Nanomaterial Composition which can be used as is in solution or gel form or can be further concentrated *in vacuo* or by baking. This method is illustrated in FIG. 2.

### One General Method for Making an Optical Nanomaterial Composition Film

An Optical Nanomaterial Composition is applied onto a flat substrate or into a flat-bottomed vessel such as a glass or ceramic dish and all solvent is removed via baking at an appropriate temperature. The resultant residue is then subjected to UV radiation or further thermal annealing to cure the optical gel. The cured composition can then be baked again to completely remove any residual solvent and provide a pure Optical Nanomaterial Composition film which can be peeled off of the substrate or vessel. This method is outlined in FIG. 3.

In one embodiment, the Optical Nanomaterial Composition is applied to a substrate using spin-coating.

The Optical Nanomaterial Composition can further comprise a surfactant to assist in stabilizing the nanotube suspension in the despersion media. Surfactants useful in the present methods include cationic, anionic, nonionic or amphoteric surfactants.

### 5.6 Uses of the Optical Nanomaterial Compositions

The Optical Nanomaterial Compositions disclosed herein are useful, for example, as an index-matching gel or an optical film and are suitable for applications in a range of optical and sensor devices for applications, including but not limited to noise suppression, for noise suppression, passive Q-switching, mode-locking, waveform shaping, optical switching, optical signal regeneration, phase conjugation, in filter devices, dispersion compensation, wavelength conversion, soliton stabilization, microcavity applications, in interferometers (such as the Gires-Tournois interferometer depicted in FIG. 4(a)), in optical, magneto-optical or electro-optical modulation (as depicted in FIG. 4(b)), as well as in biochemical sensors and photodetectors. Optical Nanomaterial Compositions are also useful as a light junction or optical interconnect.

When used as an optical device, the Optical Nanomaterial Composition may be affixed to a substrate, such as quartz, glass, or a mirror to construct an optical device; or a lens, prism, polarization plate, fiber end or fiber surface, waveguide facet or surface, laser material surface such as quartz, glass or a dielectric mirror. In one embodiment, the Optical Nanomaterial Composition is in the form of a film. The film can be pre-made and affixed to a substrate, or alternatively, the Optical Nanomaterial Composition can be applied to the substrate in solution or gel form and cured on the substrate using UV light or thermal curing, or cross linked or applied as it is to form a functional layer directly on the substrate.

### 5.6.1 Nonlinear Optical Components

The Optical Nanomaterial Composition films are useful as Nonlinear Optical Componet. For such application, it is highly desirable to have a nonlinear optical material which possesses the following characteristics: (1) large nonlinear succeptibility; (2) low optical loss in the operating wavelength range; and (3) a high relaxation speed. It has been reported that composites comprising single-walled carbon nanotubes and polyimide have an ultrafast carrier dynamics with a recovery time of less than 1 ps at a wavelength of about 1.55 µm, and also have a high third-order polarizability caused by saturable absorption. Accordingly, such composites are of great interest in terms of their possible applications in high-speed optical communication devices, such as optical switches. See Chen et al., App. Phys. Lett. 81:975-977 (2002) and U.S. Patent No. 6,782,154 to Zhao et al.

The Optical Nanomaterial Compositions are used in the invention as saturable absorbers. Saturable absorbers are can be used for ultrafast laser pulse generation and pulse reshaping to enhance the performance of high data rate fiber optic transmission.

Due to their saturable absorption properties, the Optical Nanomaterial Compositions are useful for noise suppression, for passive Q-switching, for mode-locking, waveform shaping, optical switching, optical signal regeneration, phase conjugation or filter devices, dispersion compensation, wavelength conversion, soliton stabilization, and microcavity applications (such as the Gires-Tournois interferometer).

In one embodiment Optical Nanomaterial Composition can be incorporated in actively controlled devices to achieve optical, magneto-optical or electro-optical modulation (see Fig 4b).

In one embodiment, the Optical Nanomaterial Composition can be directly put into an optical fiber loop for switch applications.

In another embodiment, a switch comprising an Optical Nanomaterial Composition can be interconnected to other optical devices on a chip using a waveguide comprising an Optical Nanomaterial Composition.

In one embodment, an Optical Nanomaterial Composition film is affixed to a substrate such such as quartz, glass, or a mirror to construct an optical device, such as a lens, a prism, a polarization plate, a fiber end, a fiber surface, a waveguide facet, a waveguide surface, or a portion or surface of a laser material. The coated region can be employed as a saturable absorber. The saturable absorption properties can be fine-tuned by selecting specific nanomaterials and by varying the nanomaterial preparation and their concentration in the Optical Nanomaterial Compositions.

In one embodiment, the substrate is an integrated optical or photonic waveguide component.

## Claims

1. Use of a composition of one or more nanomaterials and an optical coupling gel as a saturable absorber in a mode-locked laser.

2. Use according to claim 1 wherein the one or more nanomaterials are randomly oriented in the optical material.

3. Use according to claim 1 or claim 2 wherein the one or more nanomaterials have at least one dimension in the size ranging from 0.5 nm to 10 nm.

4. Use according to any one of claims 1 to 3 wherein the one or more nanomaterials have a length of from 0.01 µm to 10 mm.

5. Use according to any one of claims 1 to 4 wherein the one or more nanomaterials comprise chemically or physically functionalized nanomaterials.

6. Use according to any one of claims 1 to 5 wherein the one or more nanomaterials comprise at least one nanotube.

7. Use according to claim 6 wherein the one or more nanomaterials comprise at least one single-walled carbon nanotube.

8. Use according to any one of claims 1 to 7 the concentration of the one or more nanomaterials in the composition is from 0.0001 % to 50 % by total weight of the composition.

9. Use according to any one of claims 1 to 7 wherein the concentration of the one or more nanomaterials in the composition is from 0.01 % to 20 % by total weight of the composition.

10. Use according to any one of claims 1 to 9 wherein the composition is in the form of a film.

11. Use according to any one of claims 1 to 10 wherein the optical coupling gel operates as an index-matching gel.

## Patentansprüche

1. Verwendung einer Zusammensetzung aus einem oder mehreren Nanomaterialien und einem Gel zur optischen Kopplung als sättigungsfähigen Absorber in einem phasengekoppelten Laser.

2. Verwendung nach Anspruch 1, worin das eine oder die mehreren Nanomaterialien in dem optischen Material zufällig ausgerichtet sind.

3. Verwendung nach Anspruch 1 oder Anspruch 2, worin das eine oder die mehreren Nanomaterialien zumindest eine Größenausdehnung von 0,5 nm bis 10 nm aufweisen.

4. Verwendung nach einem der Ansprüche 1 bis 3, worin das eine oder die mehreren Nanomaterialien eine Länge von 0,01 µm bis 10 mm aufweisen.

5. Verwendung nach einem der Ansprüche 1 bis 4, worin das eine oder die mehreren Nanomaterialien chemisch oder physikalisch funktionalisierte Nanomaterialien umfassen.

6. Verwendung nach einem der Ansprüche 1 bis 5, worin das eine oder die mehreren Nanomaterialien zumindest ein Nanoröhrchen umfassen.

7. Verwendung nach Anspruch 6, worin das eine oder die mehreren Nanomaterialien zumindest ein einwandiges Kohlenstoffnanoröhrchen umfassen.

8. Verwendung nach einem der Ansprüche 1 bis 7, worin die Konzentration des einen oder der mehreren Nanomaterialien in der Zusammensetzung 0,0001 Gew.-% bis 50 Gew.-%, bezogen auf das Gesamtgewicht der Zusammensetzung, beträgt.

9. Verwendung nach einem der Ansprüche 1 bis 7, worin die Konzentration des einen oder der mehreren Nanomaterialien in der Zusammensetzung 0,01 Gew.-% bis Gew.-20 %, bezogen auf das Gesamtgewicht der Zusammensetzung, beträgt.

10. Verwendung nach einem der Ansprüche 1 bis 9, worin die Zusammensetzung in Form eines Films vorliegt.

11. Verwendung nach einem der Ansprüche 1 bis 10, worin das Gel zur optischen Kopplung als Gel zur Indexanpassung fungiert.

## Revendications

1. Utilisation d'une composition d'un ou de plusieurs nanomatériaux et d'un gel de couplage optique en tant qu'absorbeur saturable dans un laser à verrouillage de mode.

2. Utilisation selon la revendication 1, où un ou plusieurs nanomatériaux sont orientés d'une manière aléatoire dans le matériau optique.

3. Utilisation selon la revendication 1 ou la revendication 2, où un ou plusieurs nanomatériaux ont au moins une dimension dans la taille allant de 0,5 nm à 10 nm.

4. Utilisation selon l'une quelconque des revendications 1 à 3, où un ou plusieurs nanomatériaux précités ont une longueur de 0,01 µm à 10 mm.

5. Utilisation selon l'une quelconque des revendications 1 à 4, où un ou plusieurs nanomatériaux comprennent des nanomatériaux chimiquement ou physiquement fonctionnalisés.

6. Utilisation selon l'une quelconque des revendications 1 à 5, où un ou plusieurs nanomatériaux précités comprennent au moins un nanotube.

7. Utilisation selon la revendication 6, où un ou plusieurs nanomatériaux comprennent au moins un nanotube de carbone à paroi unique.

8. Utilisation selon l'une quelconque des revendications 1 à 7, la concentration des un ou plusieurs nanomatériaux dans la composition est de 0,0001 % à 50 % en poids total de la composition.

9. Utilisation selon l'une quelconque des revendications 1 à 7, où la concentration d'un ou de plusieurs nanomatériaux précités dans la composition est de 0,01 % à 20 % par poids total de la composition.

10. Utilisation selon l'une quelconque des revendications 1 à 9, où la composition est sous la forme d'un film.

11. Utilisation selon l'une quelconque des revendications 1 à 10, où le gel de couplage optique fonctionne comme un gel d'indice.
